# EUROPEAN PATENT SPECIFICATION

(11) **EP 2 032 510 B1**
(45) Date of publication and mention of the grant of the patent: **02.12.2009**
(21) Application number: 07722663.7
(22) Date of filing: 13.06.2007
(51) Int. Cl.: C04B 41/45, C04B 41/48, C08J 5/24, E04D 1/28

(54) **A METHOD FOR IMPREGNATION OF POROUS OBJECTS**
VERFAHREN ZUM IMPRÄGNIEREN VON PORÖSEN GEGENSTÄNDEN
PROCÉDÉ D'IMPRÉGNATION D'OBJETS POREUX

(30) Priority: 14.06.2006 DK 200600804
(43) Date of publication of application: 11.03.2009
(73) Proprietor: Børthy Holding ApS, 8900 Randers (DK)
(72) Inventor: PETERSEN, Lars, Børthy, 8900 Randers (DK)
(74) Representative: Henriksen, Michael
(86) International application number: PCT/DK2007/000286
(87) International publication number: WO 2007/143997

(56) References cited:
- EP-A- 1 314 709
- EP-A- 1 371 685
- WO-A-02/24343
- WO-A-2007/059773
- US-A- 5 413 808

## Description

### Field of the Invention

The present invention relates to a method for impregnating porous objects in such a way that the impregnated objects are provided with a substantially closed surface which is highly resistant against wear of mechanical, chemical, thermal and/or biological nature.

### Background of the Invention

For a number of purposes, it may be desirable to impregnate porous objects such as for example clay or cement based materials with a surface onto which pollution, algae and other undesirable substances cannot adhere, or in case they adhere that it will be relatively easy to clean these surfaces without destroying the pore structure of said surface.

For these purposes, it has hitherto been know to paint especially concrete surfaces for a number of purposes, among other in order to render them easy to clean. Also, in a number of instances the concrete structures are painted in order to avoid the ingress of carbon dioxide, moisture, acid rain and salt etc., which all have a detrimental effect on the integrity of the concrete structure.

For clay based tiles, it is well-known that these may be provided with an inorganic glazing, whereby a glass-like surface is created. This process of glazing the tiles is rather costly, and for a number of purposes, the finished surface is not the surface of the original material, but exhibits completely different characteristics in relation to colour, shine, glace and resistance. Furthermore, the glazing is a very hard material such that the objects, in particular when the objects are roof tiles, become rather fragile where a small mechanical impact may chip off the glazing, or crack the glazing such that the enclosing properties of the glazing are not fulfilled.

EP 1 314 709 A2 discloses a process for providing improved strength to the surface of building elements, such as concrete building elements. This prior art process involves the sealing of the pores of the surface of the building element, e.g. by brushing the surface, and subsequently application of the surface with a polymer of acrylic, polyurethane or epoxy or a mixture thereof. The application of the polymer according to the process of EP 1 314 709 A2 takes place under atmospheric pressure. Although this process provides for building elements, such as concrete building elements, having a surface of improved resistance, there still is a need for porous objects exhibiting even more strengthened surface characteristics. This is especially the case in respect of porous objects which are to be exposed to various weather conditions.

### Object of the Invention

Therefore, it is an object according to a first aspect of the present invention to provide a method for impregnating a porous object with an impregnation material comprising acrylic, epoxy or polyurethane and allowing at least part of said material to enter into the pores of said object utilising subatmospheric or superatmospheric pressure.

Furthermore, it is an object according to a second aspect of the present invention to provide a porous object which has been impregnated according to this process.

In the art, it is well-known to impregnate timber under pressure. These processes are developed in order to render the timber construction more resistant to the influence of the environment such that a longer life expectancy may be provided. The above methods, however, have not been found suitable for impregnating porous materials which are treated in the scope of the present invention. This is due to the fact that the pressure impregnating method and materials used for impregnating timber rely on the fact that timber is a rather porous material having fibres and grains which easily allow the impregnating material to enter and distribute itself inside the material. For cement based and clay based materials, only very small pores/voids are present such that the impregnating material will not be distributed inside the material due to capillary actions or any other physical influence. In timber, it is by using vacuum possible to suck the impregnating material through the fibres and grains of the wood such that a thorough impregnation may be provided.

Such method has however never been considered feasible for use with products within the scope of the present invention in that the voids and pores in the porous material are so miniscule that the capillary forces in the pores makes them unsuitable for such a process.

### Description of the Invention

The present invention relates in a first aspect to a method for impregnation of porous objects comprising the following steps i)-v):
i) applying an injection layer of a material comprising acrylic, epoxy or polyurethane onto the surface of at least part of the porous object and allowing at least part of said material to enter into the pores of said object utilising subatmospheric or superatmospheric pressure;
ii) allowing the porous object to return to an atmosphere of normal pressure;
iii) optionally at least partly allowing the injection layer to harden;
iv) applying a topcoat of acrylic, epoxy or polyurethane onto the area of the porous object impregnated with the injection layer;
v) allowing the topcoat to harden;
**characterised in that** the injection layer applied in step i) and/or the topcoat applied in step iv) comprises pulverised glass having a particle size of 0 nm to 100 µm.

Furthermore, the present invention relates in a second aspect to a porous object impregnated according to the method of the present invention.

### Description of the Drawing

Fig. 1a is a photograph showing a concrete tile impregnated according to example 1a. Fig. 1a shows an area (upper left corner) of the surface of the top coat of the concrete tile which has been being subjected to a adhesion strength test and thus exposing the concrete underneath. Fig. 1a also shows a adhesion strength test dolly which is glued to the surface of the top coat of the tile and which has already being subjected to a adhesion strength test without any breakdown of the surface within the tensile strength limits of the apparatus.
Fig. 1b is a close-up of the area (upper left corner) of the surface of the top coat of the concrete tile of Fig. 1a which has been already being subjected to an adhesion strength test. The concrete underneath the top coat is clearly recognised.
Fig. 1c - 1g each shows a thin section photograph of different areas of the surface part of the concrete tile impregnated according to example 1a.
Fig. 1h shows the difference of the impact of the weather of a concrete tile made according to Example 1a (lower tile) and a prior art concrete tile (upper tile) impregnated with an acrylic coating not comprising pulverised glass.
Fig. 2a - 2d each shows a thin section photograph of different areas of the surface part of the concrete pipe impregnated according to example 2.
Fig. 3a shows a thin section photograph of the surface part of the high strength concrete tile impregnated according to example 3a.
Fig. 3b - 3f each shows a thin section photograph of different areas of the surface part of the concrete pipe impregnated according to example 3b.
Fig. 4a shows an impregnated tile of example 4 after being subjected to an abrasion strength test involving five dollies.
Fig. 4b and 5 each shows a thin section photograph of different areas of the surface part of the concrete tile impregnated according to example 5.
Fig. 6 shows a thin section photograph of an area of the surface part of the eternit object impregnated according to example 6.
Fig. 7a and Fig 7b each shows a thin section photograph of different areas of the surface part of the clay tile impregnated according to example 7.

### Detailed Description of the Invention

Tests have shown that it is possible to impregnate porous objects, such as cement or clay based materials by using either superatmospheric pressure or subatmospheric pressure in relation to the ambient pressure. The impregnating material of choice must be chosen in such a way that it fulfils both the requirements to the finished surface, i.e. that a substantially closed surface is provided, and at the same time it must be of a viscosity such that it is possible for the material to migrate into the pores and voids present in the surface layers of the porous objects, such as cement and clay based materials. The present inventor has found that acrylic, epoxy or polyurethane comprising pulverised glass having a particle size of 0 nm to 100 µm fulfils the above requirements.

Accordingly, the method for impregnation of porous objects according to the present invention comprises the following steps:
i) applying an injection layer of a material comprising acrylic, epoxy or polyurethane onto the surface of at least part of the porous object and allowing at least part of said material to enter into the pores of said object utilising subatmospheric or superatmospheric pressure;
ii) allowing the porous object to return to an atmosphere of normal pressure;
iii) optionally at least partly allowing the injection layer to harden;
iv) applying a topcoat of acrylic, epoxy or polyurethane onto the area of the porous object impregnated with the injection layer;
v) allowing the topcoat to harden;
**characterised in that** the injection layer applied in step i) and/or the topcoat applied in step iv) comprises pulverised glass having a particle size of 0 nm to 100 µm.

Hence, according to the method of the present invention a total of at least two layers are applied onto the surface of the porous object; viz. an injection layer which with the help of either superatmospheric pressure or subatmospheric pressure is forced at least partly into the pores of the porous object to be impregnated, and subsequently a topcoat which is applied on top of the injection layer, and which provides the desired finishing touch to the surface of the final product.

### The porous object to be impregnated

The objects to be impregnated with the present invention may be any type of porous objects such as for example objects comprising a cement or clay based material, marble, terrazzo, granite, travertine, sandstone or etemit, without limiting the application to these. Examples of finished products are clay or cement based roof tiles. Other products are: tiles; pipes, such as sewer pipes; construction elements for wind mills; construction elements for oil rigs; construction elements for patios or balconies; construction elements for staircases, such as stair case steps; pylons for suspension of cables for transmission of electrical power; construction elements for floors; construction elements for use in the field of agriculture, such as ensilage floors, construction elements for floors in ensilage silos or for slatted floors or for feed alleys or for alleys for collecting faecal matter in stables; table tops, window sills, furniture.

Preferably, the objects to be impregnated are stored at approximately 30 - 50 °C, such as approximately 40 °C for 12 hours immediately prior to impregnation in order to expel moist form the pores.

### The polymer to be used as impregnation material

The polymer to be used as impregnation material is selected from the group comprising acrylates, epoxides and polyurethanes. The impregnating material may be a two-component material where a hardener is added to the resin of the impregnation material prior to applying the material to the objects. The hardener may be mixed with the resin of the impregnating material just prior to leaving the nozzle head from which nozzle head it will be ejected as a mist towards the object to be treated. By mixing the two components in the nozzle, no contamination and possible clogging of the nozzle device will occur. Also, the pot life of the mixture will continuously remain fresh in that the amount of time from the mixed impregnating material leaves the nozzle and until it impacts the surface of the object to be treated may be kept relatively short and constant throughout the entire application process. By further regulating the hardening time of the two-component impregnating material, it is possible to create a relatively short impregnating cycle such that the objects treated according to the inventive method relatively quickly after leaving the installation in which the method is carried out may be stacked, stored or otherwise handled.

A wide range of acrylics may be used as a material for the injection layer and/or for the top coat. The acrylic Teknocryl Aqua 2789 from the company Teknos have proven excellent as a material for the injection layer and the topcoat. Teknocryl Aqua 2789 is a water-based 1-component acrylic available in different colours which harden upon drying. It has a dry matter content of 40%.

A wide range of epoxies may alternatively be used as a material for the injection layer and/or for the top coat. The epoxy Teknofloor Primer 310 Epoxy Varnish from the company Teknos have proven excellent as a material for the injection layer and the topcoat. Teknofloor Primer 310 Epoxy Varnish is a solvent-free two-component epoxy comprising a resin part and a hardener part.

Another suitable epoxy for use as an injection layer material and/or a topcoat according to the method of the present invention is Inerta 250 from the company Teknos. Inerta 250 is a 2-component epoxy with a low content of solvents (dry matter content ca. 96 % vol) comprising a resin and a hardener.

A wide range of polyurethanes may alternatively be used as a material for the injection layer and/or for the top coat. The polyurethane 3646 from the company Teknos have proven excellent as a material for the injection layer and the topcoat. Teknos 3646 is a two-component polyurethane comprising a resin part and a hardener part and having a dry-matter content of approx. 63%.

A person skilled in the art will be able to provide other acrylics, epoxides and polyurethanes suitable for use in the method of the present invention, such as those manufactured by Bayer, BASF, Huntsman and Akzo Nobel.

In a further embodiment of the invention, the impregnation material optionally comprises a solvent or thinner. The impregnation material to be used in the process according to the present invention may be water-based or based on an organic solvent. In some instances it will be advantageous to apply the impregnation material in a relative dilute state which may be accomplished by thinning the impregnation material with a thinner. The thinner may like the impregnation material itself be water-based or based on an organic solvent. It is preferred to use a thinner which according to the instructions of the manufacturer of the impregnation material is compatible with the impregnation material to be applied. Hence, in each specific instance one should consult the supplier of the impregnation material for information relating to suitable solvents.

The impregnation layer and/or the topcoat may be coloured or transparent depending on the desired visible properties of the impregnated object.

In a preferred embodiment according to the method of the present invention, the topcoat and/or the injection layer comprises a biocide and/or an UV-protective additive. Inclusion of such substances may result in prolonged life span of the surface of the impregnated objects and prolonged avoidance of algae growth.

The UV-protective additive may be selected from a wide range of commercially available UV-protective additives. A few of these are: Tinuvin® 384, Tinuvin® 400 and a hindered amine light stabilizer (HALS), e.g. Tinuvin® 123 or Tinuvin® 292; all commercially available from Ciba AG. A person skilled in the art will be able to come up with other suitable UV-protective additives.

The biocide may be selected from a wide range of commercially available biocides. A few of these are: methylisothiazolinone, chloromethylisothiazolinone, benzisothiazolinone, octylisothiazolinone, dichlorooctylisothiazolinone. A person skilled in the art will be able to come up with other suitable biocides.

### The pulverised glass to be included in the impregnation material

It has been found that the inclusion of pulverized glass in the impregnation material highly improves the breaking strength of the finished coating. This may probably relate to the fact that very small glass particles will fill the pores of the porous material, thereby strengthening the integrity of the coating. Hence, it is believed that the pulverised glass- when present in the injection layer - acts as an amour against wear and at the same time provides a larger surface area to which the subsequently applied topcoat can adhere, whereas when present in the topcoat, the pulverised glass acts as an amour against wear and at the same time provides protection against UV radiation.

It was surprising to verify by thin section photography analysis that the injection layer comprising pulverised glass could be injected into the pores of the porous object at a depth of up to a few mm, and accordingly provide for a coating which in many instances was stronger than the porous material itself as evidenced by the adhesion strength tests.

The pulverized glass to be used in the impregnating material has a particle size of 0 nm to 100 µm. Preferably the pulverized glass has a particle size of 10 nm to 99 µm, such as 20 nm to 95 µm, such as 30 nm to 90 µm, e.g. 1 µm to 80 µm, for example 5 µm to 50 µm, such as 8 µm to 40 µm, e.g. 10 µm to 25 µm.

In a preferred embodiment according to the process of present invention, the pulverised glass has a particle size distribution in such a way that min. 50 wt% of the particles having a particle size of 20 µm or less, e.g. in such a way that min. 40 wt% of the particles having a particle size of 10 µm or less, e.g. in such a way that min. 25 wt% of the particles having a particle size of 5 µm or less.

It should be noted that in the above expression, a particle size of 0 nm is to be construed as the particle size is not restricted to any lower limit. Accordingly, in its general formulation, the particles of the pulverised glass may have any size in the range of 100 µm or lower.

It has been found that a particle size distribution of the pulverised glass according to the following; table 1 is particularly suitable for use in the process according to the present invention.

**Table 1**

| Diameter of hole of sieve (µm) | Amount of glass particles passing hole (wt%) |
|---|---|
| 38.2 | 88.1 |
| 28.5 | 76.2 |
| 21.4 | 62.4 |
| 15.8 | 50.5 |
| 12.0 | 38.6 |
| 8.8 | 28.7 |
| 6.3 | 22.8 |
| 4.6 | 14.9 |
| 3,3 | 8.9 |
| 1.4 | 3.0 |

The content of the pulverized glass is between 2 and 94 wt % of the base components of the polymer. The term "the base components of the polymer" in this description and the appended claims is to be interpreted as the polymer resin plus hardener, if applicable. Hence, any solvent added to the polymer is not included in the base components of the polymer in respect of calculating the percentage of glass content.

Preferably, the content of the pulverized glass is included in an amount of 4 - 90 wt%, such as 10 - 80 wt%, such as 20 - 70 wt%, e.g. 30 - 60 wt%, such as 40 - 50 wt% of the total amount the acrylic, epoxy or polyurethane of the applied amount in the respective step.

The pulverized glass is an ingredient of the impregnation material was created by pulverizing second hand glass derived from window panes. The glass was placed in a drum mill in which drum mill a number of steel balls were present whereafter the mill was rotated such that the steel balls would crush the glass. Alternatively, the pulverized glass to be used in the present invention may be obtained by means of other grinding techniques, such as by use a an attritor system or by means of a roller edge apparatus.

Traditionally, glass is considered to be a hydrophobic material but when pulverized such that the particle distribution of the pulverized glass is in the range 0 nm to 100 µm, the glass particles seem to exhibit hygroscopic properties such that it is possible to use the pulverize glass in an impregnation material mentioned above where the pulverized glass in addition to being a passive ingredient also is active in that a very good dispersion of the pulverized glass in the matrix of the impregnation material filling the voids and pores of the porous objects, is achieved. Furthermore, the pulverized glass particles to a certain extent exhibit binding properties such that the pulverized glass does contribute to the enhanced strength in the hardened impregnation material.

By including pulverized glass in the top coat material according to the present invention, a very smooth surface of the finished, impregnated, porous object is obtained.

In one embodiment according to the present invention the injection layer as well as the top coat comprises pulverised glass. In another embodiment according to the present invention only the injection layer comprises pulverised glass; and in yet another embodiment according to the present invention only the topcoat comprises pulverised glass.

### Application of the injection layer of the porous object using superatmospheric pressure

In one preferred embodiment of the method according to the invention, the injection layer is applied using superatmospheric pressure.

In this embodiment, the porous object after application of the injection layer is subjected to superatmospheric pressure, i.e. pressures above atmospheric pressure. The application of superatmospheric pressure after the injection layer has been applied forces the material of the injection layer into the pores of the porous object.

In a preferred embodiment of the method according to the invention the superatmospheric pressure is in the range of 1,5 - 25 bar, such as 2 - 20 bar, e.g. 4 - 15 bar, for example 5 bar to 10 bar.

In the present description and the appended claims, whenever a pressure is given it is understood that this pressure is an absolute pressure. In this frame of reference a perfect vacuum has a pressure of 0 bar and normal pressure (i.e. neither subatmospheric pressure nor superatmospheric pressure) is 1 bar. Superatmospheric pressure is to be understood as an absolute pressure of more than 1 bar, whereas subatmospheric pressure is to be understood as an absolute pressure of less than 1 bar.

When the injection layer is applied using superatmospheric pressure, it is usually sufficient to apply the superatmospheric pressure for a relative short period of time. Hence, according to a preferred ambodiment of the present invention the superatmospheric pressure is applied to the porous object comprising the applied injection layer for a period of time of 5 seconds - 10 minutes, such as for 10 seconds - 5 minutes, e.g. for 15 seconds - 4 minutes, e.g. for 20 seconds - 2 minutes, such as for 30 seconds - 1 minute.

Preferably, the the objects to be impregnated are stored at approximately 30 - 50 °C, such as approximately 40 °C for 12 hours immediately prior to impregnation.

It is self-evident that the superatmospheric pressure must be applied before the applied injection layer has fully hardened; i.e. the superatmospheric pressure must be applied while the injection layer still has liquid characteristics.

### Application of the injection layer of the porous object using subatmospheric pressure

In another embodiment of the method according to the invention, the porous object is impregnated with an injection layer utilising subatmospheric pressure. In this embodiment, the object to be impregnated is subjected to a subatmospheric pressure, whereafter the porous object is impregnated with the injection layer.

In a preferred embodiment, the subatmospheric pressure is 0.001 - 0.8 bar, such as 0.002 - 0.7 bar, e.g. 0.005 - 0.5 bar, such as 0.01 - 0.4 bar, e.g. 0.02 - 0.2 bar, e.g. 0.04 - 0.1 bar.

In a preferred embodiment, the subatmospheric pressure is applied for 30 - 240 min., such as 60 - 180 min., e.g. 90 - 120 min. prior to the application of the injection layer. When the desired subatmospheric pressure has been established and maintained for the desired period of time, the injection layer is applied.

It is preferred that the object is maintained at subatmospheric pressure for a short time, such as 2 - 45 min., such as 5 - 30 min., e.g. 10 - 20 min. after the application of the injection layer. This allows the injection layer material to distribute itself over the surface of the porous object which has been impregnated and to a small extent to flow a little distance into the pores of the object.

Thereafter, the object is brought back to conditions of normal pressure. As the pressure is increased the rising pressure outside the pores of the porous object forces the injection layer material further into the pores.

Preferably, the the objects to be impregnated at subatmospheric pressure are stored at approximately 30 - 50 °C, such as approximately 40 °C for 12 hours immediately prior to impregnation.

By using either superatmospheric pressure or subatmospheric pressure in the application of the injection layer, it is possible to force enough impregnating material into the surface layers of the objects such that impregnating depths calculated as the perpendicular distance from the surface of these materials will be in the range from a few µ metres and up to a few millimetres and more.

### Application of the topcoat onto the surface of the injection layer

Subsequent to the application of the injection layer, the topcoat is applied to the surface impregnated with said injection layer.

In one embodiment according to the process of the present invention is advantageous to allow the injection layer to harden for a short period of time, such as 2 - 60 minutes, e.g. 5 - 45 minutes, such as 10 - 30 minutes, e.g. 15 - 25 minutes, such as 20 minutes before the top coat is applied.

In another embodiment according to the process of the present invention, the topcoat is applied onto the surface of the injection layer immediately after the application of the injection layer after the object has been brought back to normal pressure.

In the application of the topcoat no subatmospehric or superatmospheric pressure condition is needed. Hence, the topcoat can be applied at normal pressure.

There is no restriction as to type of topcoat material in relation to the type of injection layer material, as long as the topcoat material is selected from the group comprising acrylics, epoxies and polyurethanes. Accordingly, the injection layer/topcoat-system may be any of the following: acrylic/acrylic, acrylic/epoxy, acrylic/polyurethane, epoxy/acrylic, epoxy/epoxy, epoxy/polyurethane, polyurethane/acrylic, polyurethane/epoxy, polyurethane/polyurethane.

In a preferred embodiment according to the method of the present invention, the topcoat material is of the same type as the injection layer material. Hence, in a preferred embodiment according to the method of the present invention, the injection layer/topcoat-system is selected from the group comprising: acrylic/acrylic, epoxy/epoxy, polyurethane/polyurethane.

In case the injection layer comprises pulverised glass having a particle size of 0 nm to 100 µm, the inclusion of such pulverised glass in the topcoat is entirely optional. However, in case the injection layer does not comprise pulverised glass, the topcoat must comprise pulverised glass having a particle size of 0 nm to 100 µm in order to provide the desired strength of the combined system injection layer/topcoat.

In one embodiment of the method according to the present invention, the injection layer as well as the topcoat comprises pulverised glass having a particle size of 0 nm to 100 µm. In another embodiment of the method according to the present invention, only the injection comprises pulverised glass having a particle size of 0 nm to 100 µm. In yet another embodiment of the method according to the present invention, only the topcoat comprises pulverised glass having a particle size of 0 nm to 100 µm.

### Application of two injections layers

In certain specific cases, especially in cases where a super strong surface of the porous object is required, it may be advantageous to modifify step i) of the process according to the present invention. Accordingly, in cases where an extremely strong suface is required, the first step of the process according to the present invention is substituted with step 1a) reading:
ia) applying a first injection layer of a material comprising acrylic, epoxy or polyurethane immediately followed by application of a second injection layer of a material comprising acrylic, epoxy or polyurethane onto the first injection layer and allowing at least part of the applied material to enter into the pores of said object utilising subatmospheric or superatmospheric pressure.

Hence, in this modified process two injections layers are applied onto the surface of at least a part of the porous object. This means that in case of superatmospheric conditions the first injection layer as well as the second injection layer is applied before applying superatmospheric pressure. In case of subatmospheric conditions, the vacuum is established and maintained for the desired period of time before the first and the second injection layer are applied. Hereafter the object impregnated with two injection layes are brought back to normal pressure.

In a preferred embodiment of this modified process according to the present invention only the first injection layer and not the second injection layer or the topcoat comprises pulverised glass.

In another preferred embodiment of this modified process according to the present invention only the first and second injection layer and not the top coat comprise pulverised glass.

In yet another embodiment of this modified process according to the present invention only the first injection layer and the top coat and not the second injection layer comprise pulverised glass.

In still another embodiment of this modified process according to the present invention the first injection layer as well as the second injection layer and the top coat comprise pulverised glass.

It is preferred that the first and second injection layer is applied as a wet-in-wet-application.

### Application of only one injection layer and no topcoat

In some cases it may be desirable to strengthen the surface quality of a porous object without imparting any new visible surface characteristics to the object. This especially applies in case of clay-based roof tiles. Some end users demand roof tiles having the appearance of an old fashion clay-based roof tile which has not been impregnated. It is possible to modify the process according to the present invention in such a way that the impregnated objects have strengthened surface qualities and without imparting any visible characteristic to the object. The modified process according to the present invention simply comprises all the features of the method of the present invention except the features of step iv) and step v), i.e. in the modified process the application of the topcoat is omitted. In this modified process it is essential that the injection layer comprises pulverised glass having a particle size of 0 nm to 100 µm in order to provide the desired.strength. By limiting the amount of the injection layer applied it is possible to ensure that all the applied injection layer by means of the superatmospheric or subatmospheric pressure applied will diffuse into the pores of the surface of the object thus leaving behind a strengthened object with better resistance against wear of mechanical, chemical, thermal and/or biological nature, but without any changed visible surface characteristics. The above modified impregnation method is particularly useful in the case of clay-based roof tiles and/or by using transparent polyurethane.

In the embodiment of the method of the present invention in which only one injection layer is applied it is advantageous that the pulverised glass amounts to 2 - 30 wt%,, preferably 5 - 20 wt%, such as 10 - 15 wt% of the total amount the acrylic, epoxy or polyurethane applied in step i).

In a further preferred embodiment, the injection layer additionally comprises a biocide and/or an UV protective substance.

### Method of application

Furthermore, the impregnation material, whether in the injection layer application step or in the top coat application step may be supplied to the surface of the objects by passing the objects through a housing in which housing a mist of impregnation material is created by ejecting the impregnating material under pressure through one or more nozzles towards the surface of the object to be impregnated. By arranging the entire method set-up inside a housing, it is possible to provide ventilation and other precautions in order to avoid the immediate environment to be exposed to solvents, hardeners or resins of the impregnating materials while carrying out the method. Furthermore, it also becomes easier to control the mist and the direction of the mist towards the objects, and at the same time maintain the temperature as well as the pressure within the preferred ranges.

In a further embodiment, the method may further be combined with the use of a heating chamber in a way that allows the objects after being impregnated to be cured at elevated temperatures. The heating chamber may provide for a quick and complete curing of the objects which have been impregnated such that handling, storing and use of the objects may be carried out immediately after leaving the heating chamber.

### The product impregnated with a method according to the present invention.

In a second aspect, the present invention also relates to an impregnated object obtainable by a method according to the present invention. The impregnated object exhibits strengthened surface characteristics.

According the object according to the present invention comprises a porous object comprising a coating of acrylic, epoxy and/or polyurethane, said coating comprises pulverised glass having a particle size of 0 nm to 100 µm.

In one embodiment of the impregnated object according to the present invention, the object is selected from the group comprising: roof tiles; pipes, such as sewer pipes; construction elements for wind mills; construction elements for oil rigs; construction elements for patios or balconies; construction elements for staircases, such as stair case steps; pylons for suspension of cables for transmission of electrical power; construction elements for floors; construction elements for use in the field of agriculture, such as ensilage floors, construction elements for floors in ensilage silos or for slatted floors or for feed alleys or for alleys for collecting faecal matter in stables; table tops, window sills, furniture.

In a preferred embodiment, the object is a cement or clay based material, or an object comprising marble, terrazzo, granite, travertine, sandstone or eternit.

### Tests and results

By selecting impregnating materials from the group comprising acrylics, epoxies and polyurethanes, the texture and appearance of the surfaces may be maintained such that even though a roof tile made from red clay is desirable, it will still appear as a red clay tile, but have properties corresponding to a glazed tile. Furthermore, the method according to the present invention may provide the porous objects with a surface in which the pores in the surface, but not the surface itself, is totally filled with and thereby sealed by the impregnating material of acrylic, epoxy or polyurethane comprising pulverised glass.

During the development of the inventive method as described above, a number of different materials have been tested and tried, and found useable in order to by means of the inventive method to provide a highly desirable result. By using the method according to the present invention, it is possible to substantially and completely fill all micro and macro voids and capillary and gel pores present in materials of the type mentioned above. The impregnating depth has by thin section analysis been determined to be between 0.02 millimetres and up to 4 millimetres.

In order to test the quality of the coatings applied to the porous objects obtained according to the method of the present invention, a series of test has been conducted.

### Adhesion strenght tests

All adhesions strength tests were perfomed following the MBK V5 procedure set out in ISO 4624.

Each adhesion strength test was performed by 2 tests of each 5 dollys glued onto the surface of the object to be tested with epoxy glue (Plastic Padding Super Steel). The glue was allowed to set for 30 min. The adhesion strength is recorded as an average of these tests. The dolly had a contact area of 6.15 cm². When the glue had hardened, a groove having a depth of 1 mm was cut around each dolly into the porous object.

Thereafter the tests were performed by pulling the dolly and recording the force applied immediately prior to the dolly's separation from the object tested.

The tests were performed in two different laboratories, using different test apparatuses. Adhesions tests show that the coatings applied to the porous objects had a strength of up to 10 MPa or more. Often the crack appeared in the material of the porous object itself and not in the applied coating(s), suggesting that the applied coating was stronger than the porous object.

### Thin section photographs

The samples of the examples were subjected to thin section photography. This test reveals the injection depths of the injection layer. The thin section was prepared by moulding a little piece of the surface of the porous object in epoxy. Thereafter this mould was subjected to abrasion in a plane essentially perpendicular to the surface of the sample until the sample had a thickness of 2 - 3 micrometers. The sample was photographed under magnification and by exposing the backside (the side opposing the side which is photographed) with UV radiation which causes the EpoDye present in the injection layer to fluorescence.

### Examples

In all the examples below, a fluorescent dye EpoDye from the company Struers Kemiske Fabrikker, Denmark, cat. No. 40300002, was added to the epoxy resin/polyurethane resin/acrylic of the injection layer in an amount of 4 g/1000 ml in order to reveal the injection depths of the injection layer in the thin section photographs.

### Example 1a - Impregnation of concrete roof tiles by using superatmospheric pressure in the injection layer application step

Roof tiles made of concrete obtained immediately after 24 hours of setting time after manufacture were used for this example. The tiles were arranged in a spray cabin in a way enabling application of the top surface of the tiles.

A polyurethane injection polymer was applied onto the top surface of the tiles. The polyurethane used was Teknodur 3646 from Teknos. The polyurethane to be applied was obtained by mixing resin and hardener in the ratio 6:1. Furthermore, 12.5 wt% thinner of the type Teknos 7040 was admixed with the resin and the hardener. The polyurethane comprised 30 wt% pulverised glass, of which min. 50 wt% had a particle size of 20 µm or less.

Subsequently; the tiles were removed from the spray cabin and arranged in an autoclave. In the autoclave the pressure was increased to 3.8 bar within 14 seconds. The temperature of the internal of the autoclave was 20 - 25 °C. Immediately hereafter the superatmospheric pressure was reduced to normal pressure and the tiles were moved to another spray cabin, in which they were arranges in a manner enabling application of the top surface of the tiles.

The tiles were then impregnated with a top coat in the second spray cabin. The top coat was a polyurethane from Teknos of the type Teknodur 3646. The topcoat was obtained by mixing polyurethane resin and hardener in the ratio 3.8:1 and adding 10 % thinner (Teknos 7040) and 30 wt% pulverised glass of which min. 50 wt% had a particle size of 20 µm or less. The temperature of the internal of the spray cabin was 20 - 25 °C.

After 5 minutes the tiles are ready for storage. Preferably the tiles are allowed to harden at normal pressure and temperature four weeks before being distributed to the consumer.

### Test results

The mean adhesion strength measured in this experiment was 3.25 MPa.

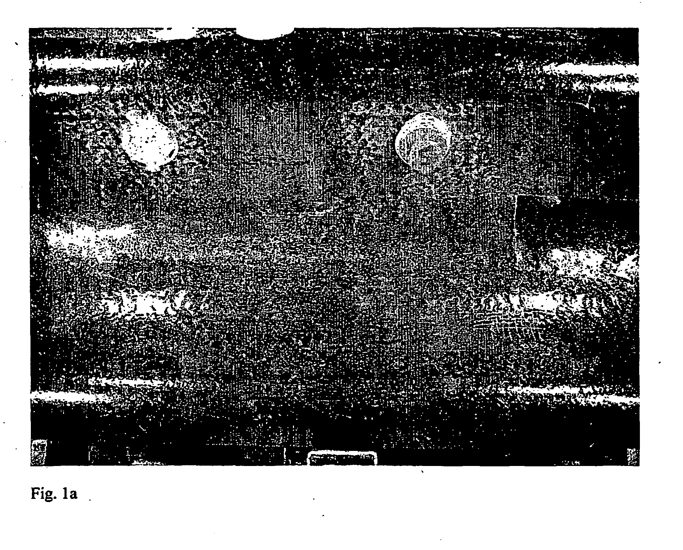

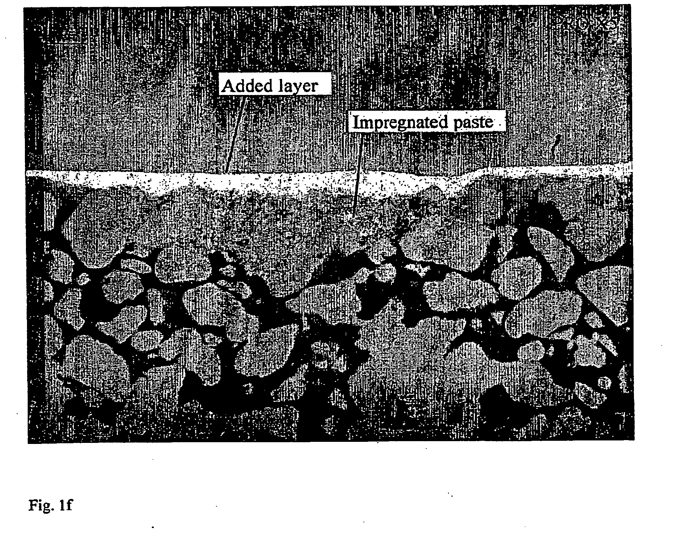

Fig. 1a shows an impregnated tile of example 1a and subjected to an adhesion strength test using two dollies. In the adhesion strength test one dolly was pulled off. Fig. 1a shows the concrete underneath (left side) this pulled-off dolly. Hence, the applied coatings were stronger than the concrete of the object itself. Fig. 1a also shows (right side) a dolly which could not be pulled off using the equipment of this experiment.

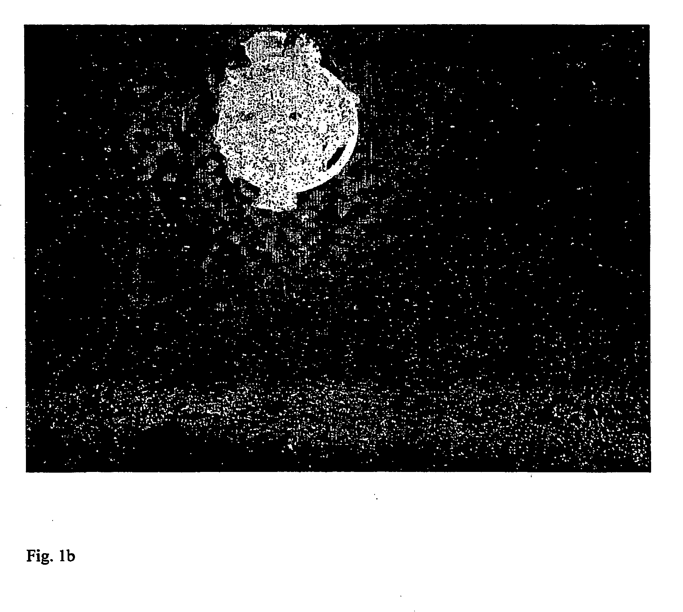

Fig. 1b is a close-up of the pulled-off dolly of fig. 1a. The concrete underneath is clearly visible. The concrete was torn apart at a depth of 4- 5 mm.

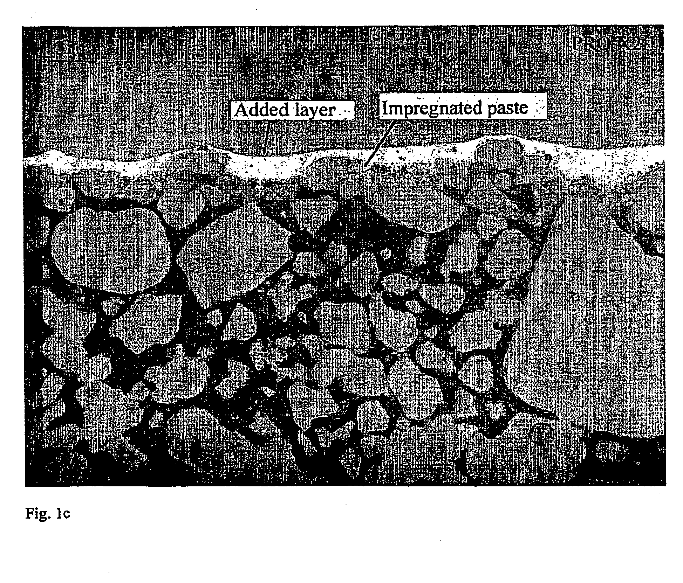

Fig. 1c shows a thin section of an area of the surface of the tile of Example 1a. The term "impregnated paste" refers to the injection layer and the term "added layer" refers to the topcoat. Individual glass particle can be seen in the topcoat. The impregnation depth is approximately 0.4 mm.

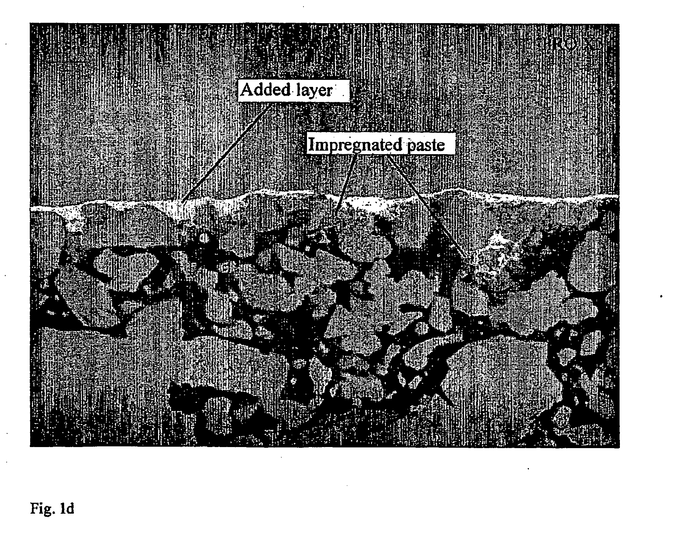

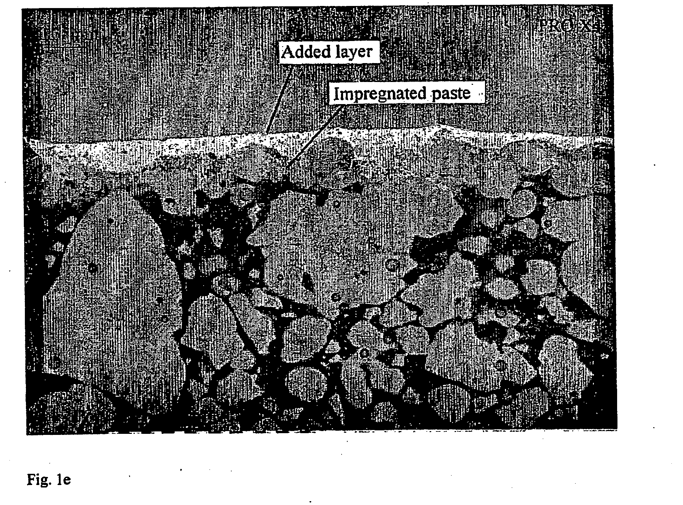

Fig. 1d, Fig. 1e and Fig. If are other thin sections of an area of the surface of the tile of Example 1a. Again, the term "impregnated paste" refers to the injection layer and the term "added layer" refers to the topcoat. The impregnation depth is 0.4 - 0.55 mm.

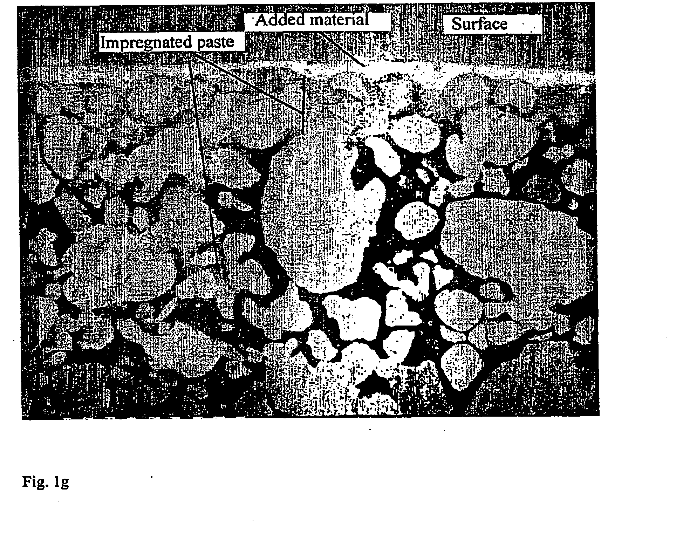

Fig. 1g is yet another thin section of an area of the surface of the tile of Example 1a. The impregnation depth is here 1.2 mm.

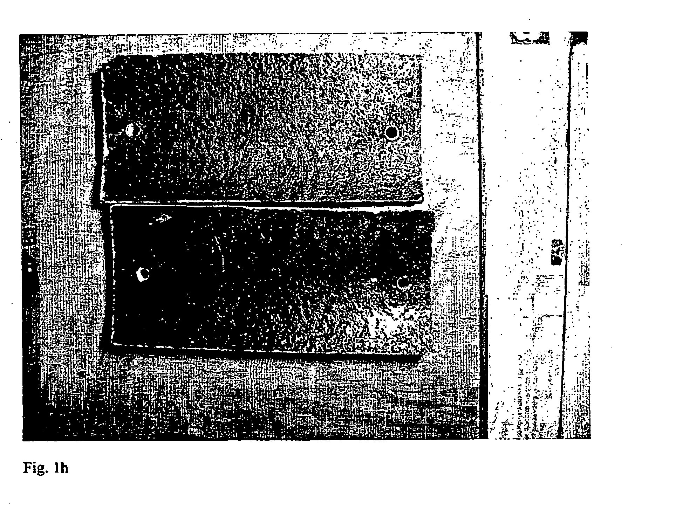

Fig. 1h shows two concrete tiles which have been subjected to a weather-o-meter test. The weather-o-meter test simulates the condition a tile will be subjected to in real environments. The tile was subjected to the test for 5 months which mimics the condition in a real time span of 5 years. The tile was sprayed periodically with water and subjected to continuously UV irradiation at 65 °C. For comparison a prior art tile (S-tagsten from Ikast Betonvarefabrik, Denmark) coated with acrylic which was made without pulverised glass and without application of subatmospheric or superatmospheric pressure was subjected to the same test. Fig. 1h shows these two tiles. The upper (prior art) tile became less shiny and clearly comprised colonies of algae, whereas the lower tile (the tile of Example 1a) remained shiny and comprised no visible signs of algae growth.

### Example 1b - Impregnation of concrete roof tiles by using superatmospheric pressure in the injection layer application step without use of pulverised glass in the top coat

Example 1a was repeated with the exception that no pulverised glass was added to the top coat.

### Test results

The mean adhesion strength measured in this experiment was 2.85 MPa.

### Example 2 - Impregnation of sewer pipes made of concrete by using superatmospheric pressure in the injection layer application step

This example describes impregnation of concrete sewer pipes on the inside surface. Concrete sewer pipes obtained immediately after 24 hours of setting time after manufacture were impregnated on the inside surface with an epoxy injection polymer of the type TeknoFloor Primer 310 F Epoxy Varnish by application. The polymer was obtained by mixing epoxy resin with hardener in the ratio 2:1. Additionally 35 wt% thinner (Teknos 7040) was added to the resin/hardener-mixture. Furthermore, the mixture comprised 45 wt% pulverised glass of which min. 50 wt% had a particle size of 20 µm or less.

The resin/hardener/glass/thinner-mixture was applied onto the inside surface of the pipes by using four rotating nozzles.

Subsequently, the pipes were subjected to autoclave conditions at 3.15 bar for 12 seconds.

Immediately after application of the injection layer a top coat of pigmented epoxy was applied. The topcoat was of the type Teknos Inerta 250 The topcoat was added 10 % thinner (Teknos 7040) and 50 wt% pulverised glass pulverised glass of which min. 50 wt% had a particle size of 20 µm or less.

The topcoat was applied by using four rotating nozzles.

After application of the topcoat the impregnation was allowed to set for four weeks before distribution to the costumer.

### Test results

The mean adhesion strength measured in this experiment was 12.4 MPa.

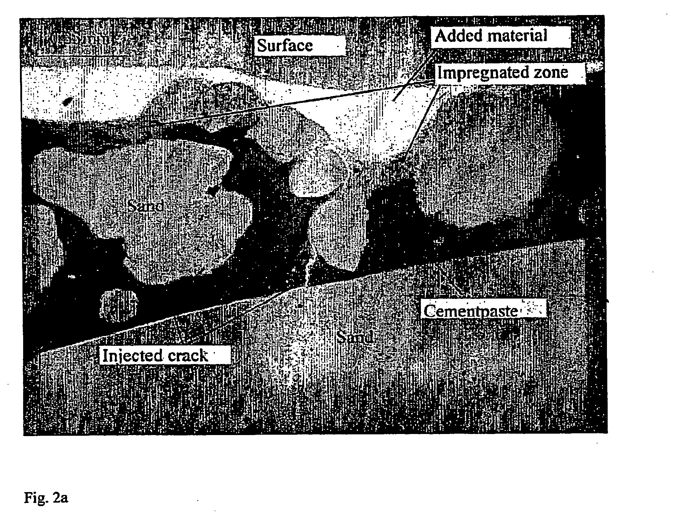

Fig. 2a shows a thin section of an area of the surface of the tile of Example 2. The term "impregnated zone" refers to the injection layer and the term "added layer" refers to the topcoat. The impregnation depth is approximately 0.3 mm. It appears from fig. 2a that also cracks in the concrete are filled with impregnation layer material (cf. injected defect).

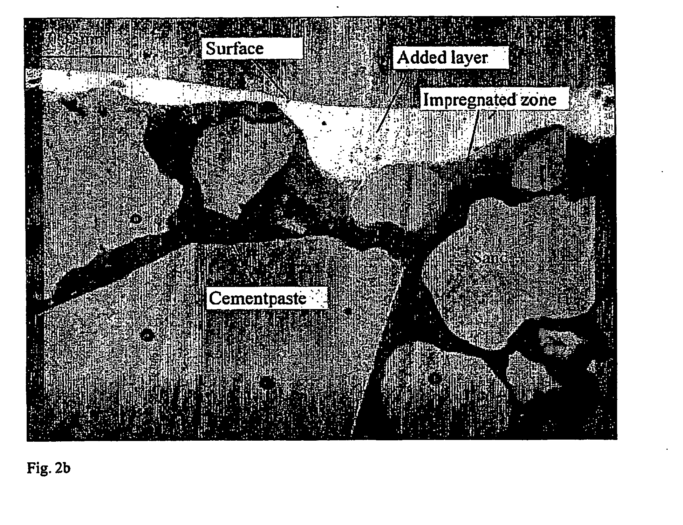

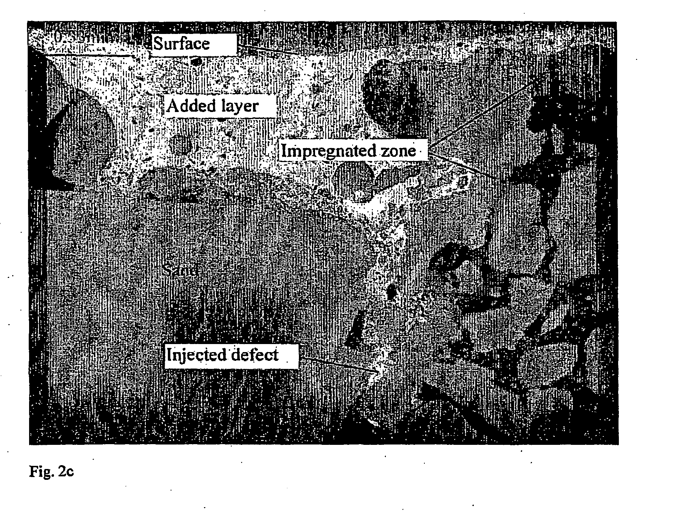

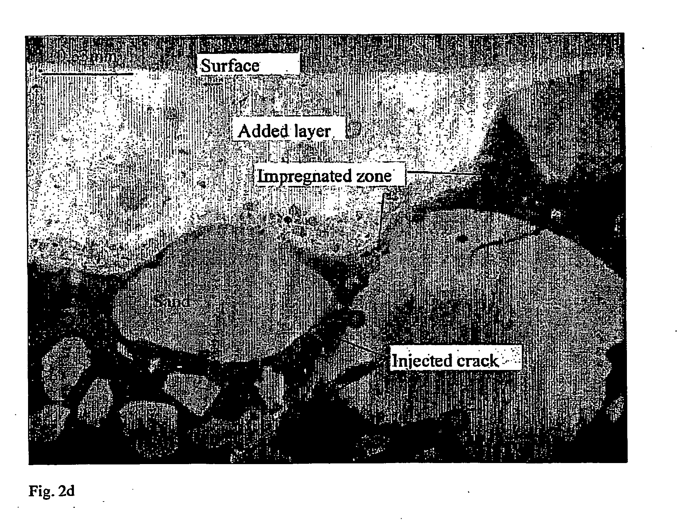

Fig. 2b, fig. 2c and fig. 2d also show thin sections of an area of the surface of the tile of Example 2.

### Example 3a - Impregnation of a tile made of high strength concrete by using subatmospheric pressure in the injection layer application step

This example discloses the impregnation of a tile made of high strength CRC concrete by using subatmospheric pressure. The tile measured 300 x 300 x 40 mm.

The high strength concrete is made of white Portland cement, sand, gravel, bauxite and polymer fibres.

The test object was arranged in an autoclave and the autoclave was evacuated to an absolute pressure of 0.002 bar. The object was kept under this condition for 180 minutes. Then, an injection polymer of polurethane (Teknodur 3646) comprising 4 wt% of pulverised glass of which min. 50 wt% had a particle size of 20 µm or less was applied by using a single nozzle. The temperature of the inside of the autoclave was 20 - 25 °C. The polyurethane was obtained by mixing resin and hardener in a ratio of 3.8:1. Furthermore 12 wt% thinner (Teknos 7040) was added.

15 minutes after the application of the injection polymer, the pressure in the autoclave was restored to atmospheric pressure. This forces part of the injection polymer into the pores of the object.

Thereafter, a polyurethane topcoat (Teknodur 3646) comprising 30 wt% pulverised glass of which min. 50 wt% had a particle size of 20 µm or less and 10% thinner (Teknodur 7040) was applied onto the injection layer using four nozzles. The ambient temperature under this application was 20 - 25°C.

### Test results

The mean adhesion strength measured in this experiment was 11.4 MPa.

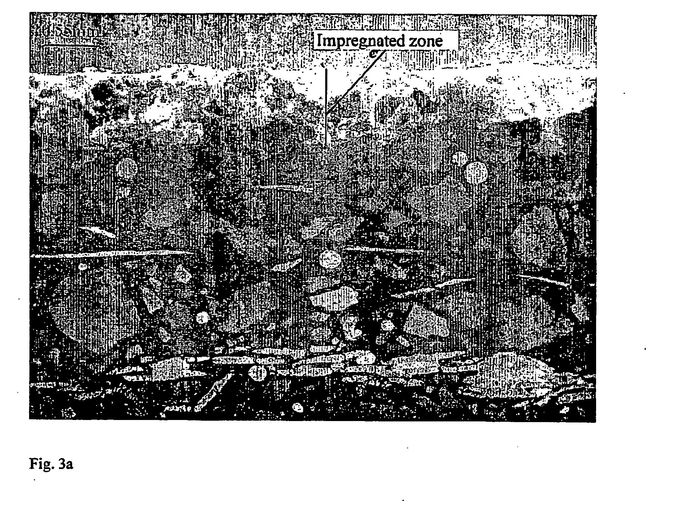

Fig. 3a shows a thin section of an area of the surface of the object of Example 3a. The term "impregnated zone" refers to the injection layer. The impregnation depth is more than 0.5 mm. The topcoat appears from fig. 3a as the white surface layer.

### Example 3b - Impregnation of an tile made of high strength concrete by using subatmospheric pressure in the injection layer application step - no topcoat applied

Example 3a was repeated with the exception that no top coat was applied and that the material of the injection lay comprised 4 wt% pulverised glass of which min. 50 wt% had a particle size of 20 µm or less.

### Test results

The mean adhesion strength measured in this experiment was 11.5 MPa.

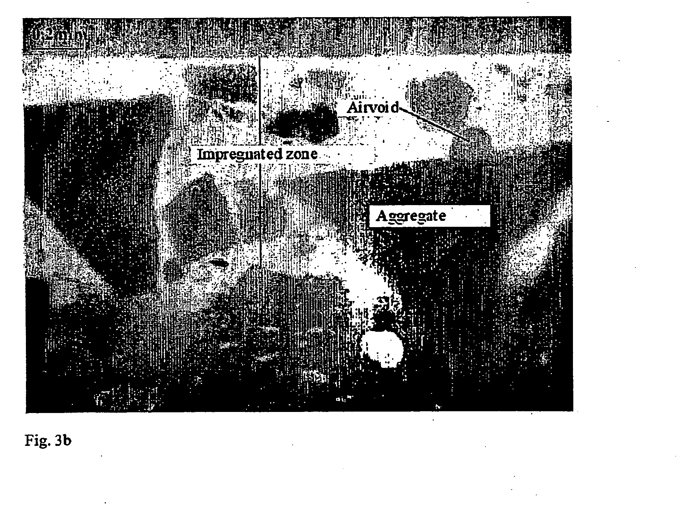

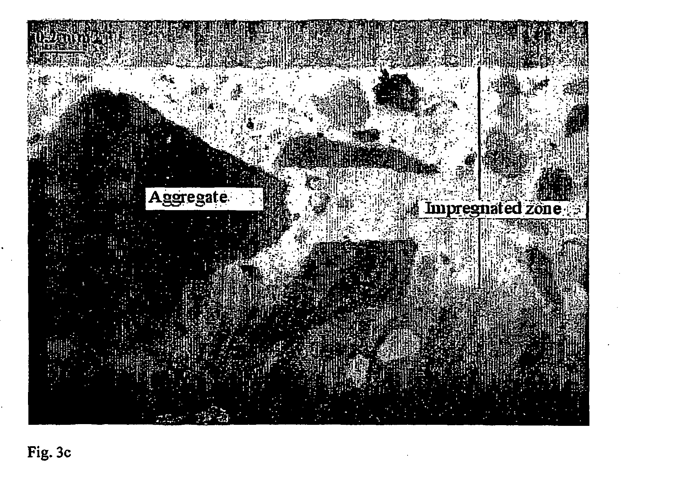

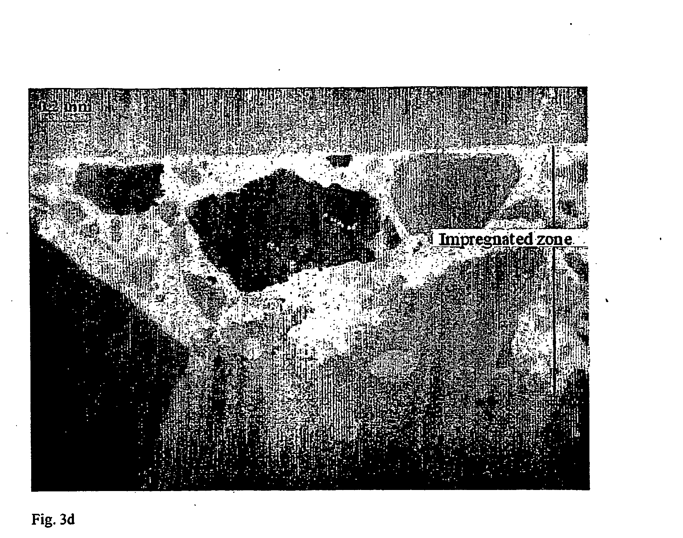

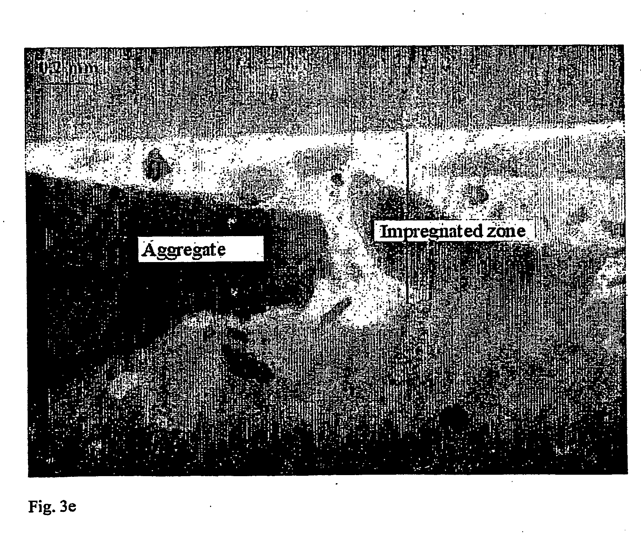

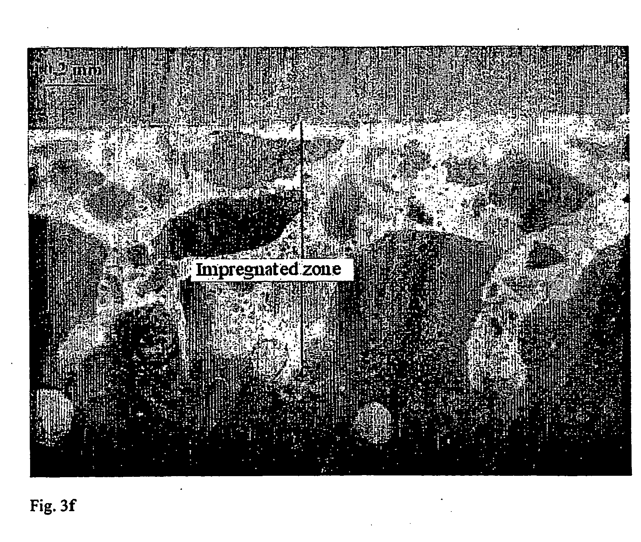

Fig. 3b, fig. 3c, Fig. 3d, fig. 3e and fig. 3f each shows a thin section of an area of the surface of the object of Example 3b. The term "impregnated zone" refers to the injection layer. The impregnation depth is more than 1.0 mm. The dark areas in the figures represent bauxite which is part of the aggregate of the high strength concrete of example 3b.

### Example 4 - Impregnation of a clay tile utilisingapplication of two injection layers

Tiles made of clay were subjected to application of a first polyurethane injection layer of the type Teknodur 3646 (ratio of resin:base was 6:1). 10% thinner (Teknos 7040) and 10 wt% pulverised glass of which min. 50 wt% had a particle size of 20 µm or less was added prior to application of the first injection layer. Subsequently, the tiles were subjected to application of a second injection layer. This layer comprises polyurethane (Teknodur 3646) comprising 5% thinner (Teknos 7040) and 20 wit% pulverised glass of which min. 50 wt% had a particle size of 20 µm or less. The ratio resin:hardener was 2:1.

After application of the second injection layer, the tiles were immediately transferred to an autoclave, in which the injection layers were forced into the pores of the porous material of the tiles. The tiles were subjected to a pressure of 4.1 bar for 21 seconds. The temperature in the autoclave was was 20 - 25°C.

Then, the tiles were transferred to a spraying cabin in which they were subjected to application of a topcoat (polyurethane of the brand Teknodur 3646, resin:hardener 3.8:1). The topcoat comprised 30 wt% pulverised glass particles of which min. 50 wt% had a particle size of 20 µm or less.

After a few minutes the tiles were ready for packaging and delivery.

### Test results

The mean adhesion strength measured in this experiment was 2.20 MPa. In comparison, an untreated red clay tile had a mean adhesion strength of 1.15 MPa.

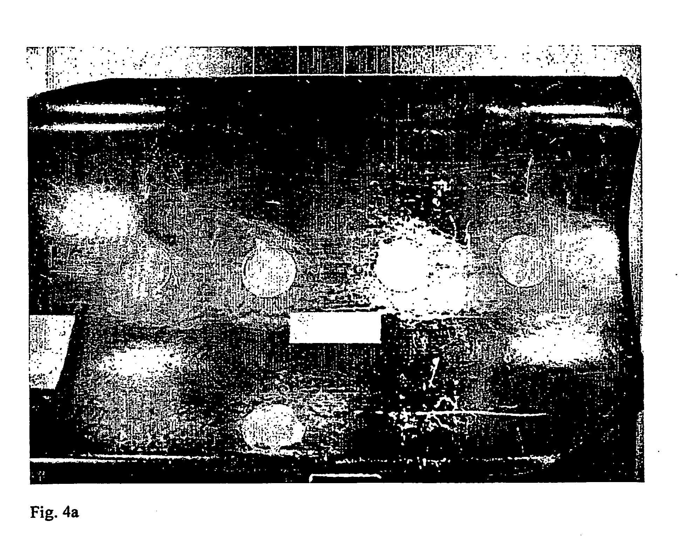

Fig. 4a shows an impregnated tile of example 4 after being subjected to an abrasion strength test involving five dollies. In respect of each dolly, the break appeared in the clay of the tile in a depth of 2 - 4 mm.

### Example 5 - Impregnation of a concrete tile with acrylic

Concrete tiles were arranged in a spraying cabin. They were subjected to application of an injection layer of arylic (Teknos Teknocryl 2789 comprising 10 wt% pulverised glass of which min. 50 wt% had a particle size of 20 µm or less and comprising 34 wt% water as thinner).

Subsequent to the application of the injection layer, the tiles were transferred to an autoclave in which they were subjected to a pressure of 3.4 bar for 16 seconds.

Thereafter, the tiles were transferred to another spraying cabin in which the were subjected to application of a top coat consisting of Teknocryl 2789 comprising 30 wt% pulverised glass particles of which min. 50 wt% had a particle size of 20 µm or less. Subsequent to the application of the top coat the tiles were left for hardening at 30 °C. Thereafter they were ready for packaging.

### Test results

The mean adhesion strength measured in this experiment was 3.68 MPa.

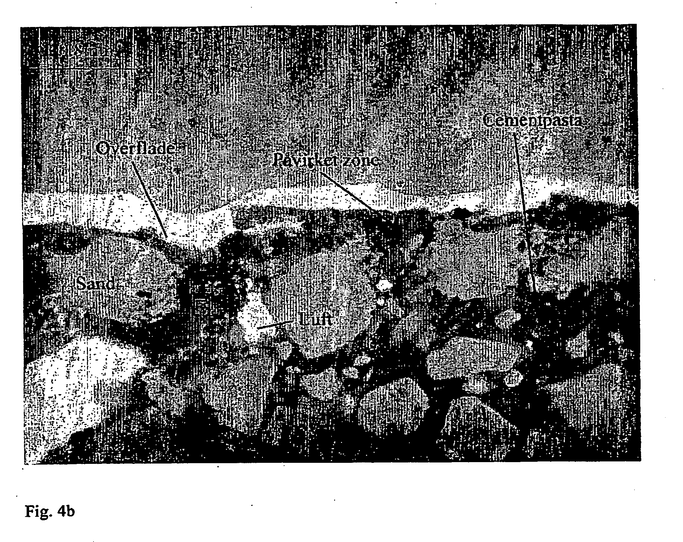

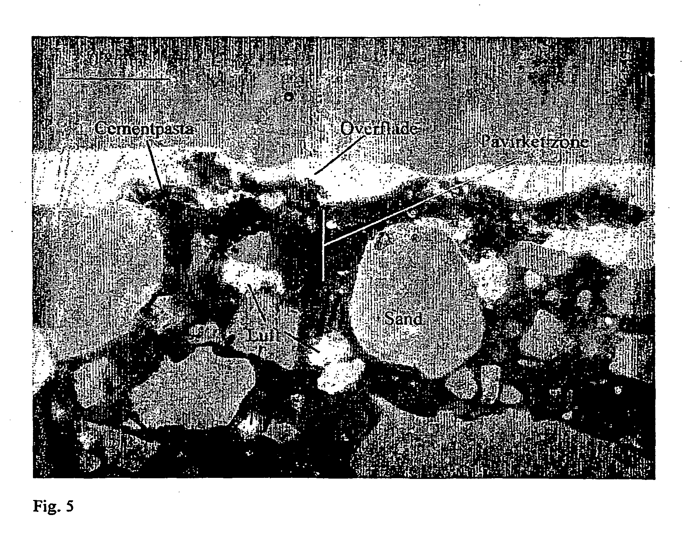

In Fig. 4b and 5 the following legends are to be applied:
"overflade" = surface
pavirket zone" = affected zone
"cementpasta" = cement paste
"sand" = sand
"luft" = air

### Example 6 - Impregnation of porous objects made of eternit by using superatmospheric pressure in the injection layer application step

the procedure of example 1 was repeated with the exception that the porous objects to be impregnated was made of etemit and that no topcoat was applied and that the amount of pulverised glass in the injection layer was 4 wt% The objects measured 200 x 100 x 10 mm.

### Test results

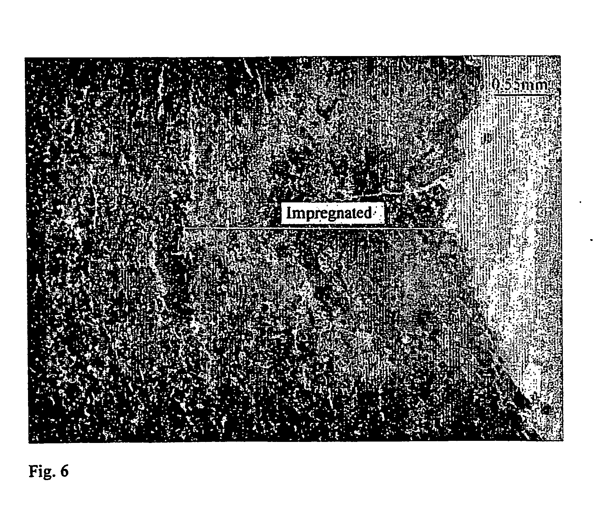

Fig. 6 is a thin section of a sample of example 6. Fig. 6 shows that the injection layer was injected into the porous etemit at a depth of 2 mm.

### Example 7 - Impregnation of a clay tile with only an injection layer

This example illustrates the impregnation of a clay tile with only an injection layer and no top coat.

Example 4 was repeated with the exception that only one injection layer was applied, that 4 wt% glass was included in the injection layer and no topcoat was applied.

### Test results

The mean adhesion strength measured in this experiment was 220 MPa. In comparison, an untreated red clay tile had a mean adhesion strength of 1.15 MPa.

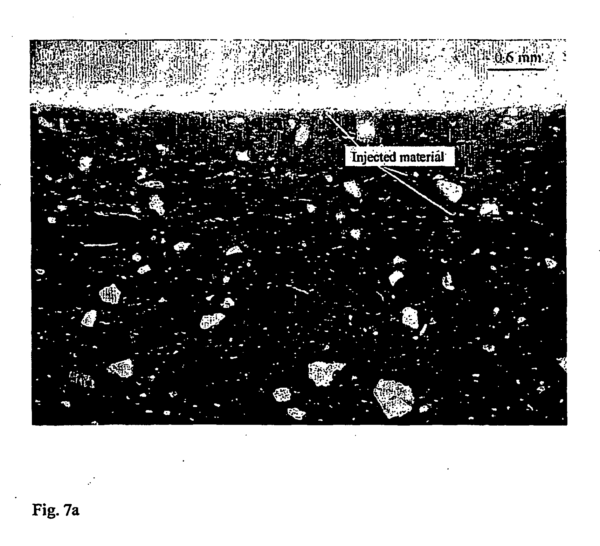

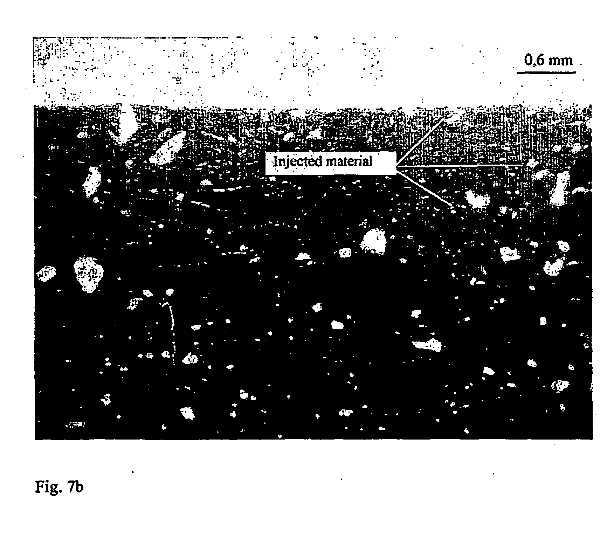

Fig. 7a and 7b each shows a thin section of an area of the surface of the object of Example 7. The term "injected material" refers to the injection layer. The impregnation depth is approximately 1.5 mm.

## Claims

1. A method for impregnation of porous objects comprising the following steps i)-v):
i) applying an injection layer of a material comprising acrylic, epoxy or polyurethane onto the surface of at least part of the porous object and allowing at least part of said material to enter into the pores of said object utilising subatmospheric or superatmospheric pressure;
ii) allowing the porous object to return to an atmosphere of normal pressure;
iii) optionally at least partly allowing the injection layer to harden;
iv) applying a topcoat of acrylic, epoxy or polyurethane onto the area of the porous object impregnated with the injection layer;
v) allowing the topcoat to harden;
**characterised in that** the injection layer applied in step i) and/or the topcoat applied in step iv) comprises pulverised glass having a particle size in the range of 100 µm or lower.

2. A process according to claim 1, wherein the amount of glass is 2 - 94 wt%, of the total amount the acrylic, epoxy or polyurethane of the applied amount in the respective step.

3. A process according to any of the claims 1 - 2, wherein said pulverised glass having a particle size distribution in such a way that min. 50 wt% of the particles having a particle size of 20 µm or less.

4. A process according to any of the preceding claims, wherein the objects to be impregnated are stored at approximately 30 - 50 °C for 12 hours immediately prior to impregnation.

5. A process according to any of the claims 1 - 4, wherein the injection layer is applied utilising superatmospheric pressure, and wherein the superatmospheric pressure is applied after the injection layer is applied.

6. A process according to claim 5, wherein the superatmospheric pressure is 1,5 - 25 bar.

7. A process according to claim 6, wherein the object is subjected to superatmospheric pressure for 5 seconds - 10 minutes.

8. A process according to claim 4, wherein the injection layer is applied at subatmospheric pressure, and wherein the subatmospheric pressure is applied prior to and under the application of the injection layer.

9. A process according to claim 8, wherein the subatmospheric pressure is 0.001 - 0.8 bar.

10. A process according to claim 8 or 9, wherein the subatmospheric pressure is applied for 30 - 240 min. prior to the application of the injection layer.

11. A process according to any of the claims 8 - 10, wherein the subatmospheric pressure is applied for 2 - 45 min. after the application of the injection layer.

12. A process according to any of the preceding claims, wherein the porous object is selected from the group comprising: roof tiles; pipes, such as sewer pipes; construction elements for wind mills; construction elements for oil rigs; construction elements for patios or balconies; construction elements for staircases, such as stair case steps; pylons for suspension of cables for transmission of electrical power; construction elements for floors; construction elements for use in the field of agriculture, such as ensilage floors, construction elements for floors in ensilage silos or for slatted floors or for feed alleys or for alleys for collecting faecal matter in stables; table tops, window sills, furniture.

13. A process according to claim 12, wherein the porous object is a cement or clay based material, or marble, terrazzo, granite, travertine, sandstone or eternit.

14. A process according to any of the preceding claims, wherein the topcoat and/or the injection layer comprises a biocide and/or an UV-protective additive.

15. A process according to any of the preceding claims, wherein step i) is modified so as to comprise the following step ia):
ia) applying a first injection layer of a material comprising acrylic, epoxy or polyurethane immediately followed by application of a second injection layer of a material comprising acrylic, epoxy or polyurethane onto the first injection layer and allowing at least part of the applied material to enter into the pores of said object utilising subatmospheric or superatmospheric pressure.

16. A process according to claim 15, wherein only the first injection layer and not the second injection layer or the topcoat comprises pulverised glass.

17. A process according to claim 15, wherein only the first and second injection layer and not the top coat comprise pulverised glass.

18. A process according to claim 15, wherein only the first injection layer and the top coat and not the second injection layer comprise pulverised glass.

19. A process according to claim 15, wherein the first injection layer as well as the second injection layer and the top coat comprise pulverised glass.

20. A process according to any of the claims 15 - 19, wherein the first and second injection layer is applied as a wet-in-wet-application.

21. A process according to any of the claims 1 - 14, wherein the injection layer comprises pulverised glass having a particle size in the range of 100 µm or lower, and wherein step iv) and step v) are omitted.

22. A process according to -claim 21, wherein the porous object is a clay-based material.

23. A process according to claim 22, wherein the injection layer comprises transparent polyurethane.

24. A process according to any of the claims 22 -23, wherein the porous object is a clay-based roof tile.

25. A process according to any of the claims 22 -24, wherein the amount of pulverised glass is 2 - 30 wt% of the total amount the acrylic, epoxy or polyurethane applied in step i).

26. A process according to any of the claims 22 - 25, wherein the injection layer additionally comprises a biocide and/or an UV protective substance.

27. A porous object impregnated according to the method of any of the preceding claims.

28. An object according to claim 27, said object being selected from the group comprising: roof tiles; pipes, such as sewer pipes; construction elements for wind mills; construction elements for oil rigs; construction elements for patios or balconies; construction elements for staircases, such as stair case steps; pylons for suspension of cables for transmission of electrical power; construction elements for floors; construction elements for use in the field of agriculture, such as ensilage floors, construction elements for floors in ensilage silos or for slatted floors or for feed alleys or for alleys for collecting faecal matter in stables; table tops, window sills, furniture.

29. An object according to claim 28, wherein said object is a cement or clay based material, marble, terrazzo, granite, travertine, sandstone or eternit.

30. An object according to any of the claims 27 - 29, wherein the porous object comprises a coating of acrylic, epoxy and/or polyurethane, said coating comprises pulverised glass having a particle size in the range of 100 µm or lower.

## Patentansprüche

1. Verfahren zur Imprägnierung von porösen Gegenständen, umfassend die folgenden Schritte i) - v):
i) Aufbringen einer Injektionsschicht aus einem Material, das Acrylharz, Epoxy oder Polyurethan umfasst, auf die Oberfläche mindestens eines Teils des porösen Gegenstandes und Ermöglichen, dass mindestens ein Teil des Materials in die Poren des Gegenstandes eintritt, wobei man unteratmosphärischen oder überatmosphärischen Druck verwendet ;
ii) Ermöglichen, dass der poröse Gegenstand zu einer Atmosphäre normalen Drucks zurückkehrt;
iii) gegebenenfalls zumindest teilweises Ermöglichen, dass die Injektionsschicht härtet;
iv) Aufbringen einer Deckschicht aus Acrylharz, Epoxy oder Polyurethan auf die Fläche des porösen Gegenstands, die mit der Injektionsschicht imprägniert ist;
v) Ermöglichen, dass die Deckschicht härtet;
**dadurch gekennzeichnet, dass** die Injektionsschicht, die im Schritt i) aufgebracht wird, und/oder die Deckschicht, die im Schritt iv) aufgebracht wird, pulverförmiges Glas mit einer Teilchengröße im Bereich von 100 µm oder weniger umfasst.

2. Verfahren nach Anspruch 1, bei dem die Glasmenge 2 - 94 Gew.-% der Gesamtmenge an Acrylharz, Epoxy oder Polyurethan der im jeweiligen Schritt aufgebrachten Menge beträgt.

3. Verfahren nach irgendeinem der Ansprüche 1 - 2, bei dem das pulverförmige Glas eine Teilchengrößenverteilung auf solche Weise aufweist, dass mindestens 50 Gew.-% der Teilchen eine Teilchengröße von 20 µm oder weniger aufweisen.

4. Verfahren nach irgendeinem der vorangehenden Ansprüche, bei dem die zu imprägnierenden Gegenstände 12 Stunden unmittelbar vor der Imprägnierung bei etwa 30 bis 50 °C aufbewahrt werden.

5. Verfahren nach irgendeinem der Ansprüche 1 - 4, bei dem die Injektionsschicht unter Verwendung von überatmosphärischem Druck aufgebracht wird und bei dem der überatmosphärische Druck angewendet wird, nachdem die Injektionsschicht aufgebracht ist.

6. Verfahren nach Anspruch 5, bei dem der überatmosphärische Druck 1,5 - 25 Bar beträgt.

7. Verfahren nach Anspruch 6, bei dem der Gegenstand 5 Sekunde - 10 Minuten dem überatmosphärischen Druck ausgesetzt wird.

8. Verfahren nach Anspruch 4, bei dem die Injektionsschicht bei unteratmosphärischem Druck aufgebracht wird und bei dem der unteratmosphärische Druck vor und während des Aufbringens der Injektionsschicht angewendet wird.

9. Verfahren nach Anspruch 8, bei dem der unteratmosphärische Druck 0,001 - 0,8 Bar beträgt.

10. Verfahren nach Anspruch 8 oder 9, bei dem der unteratmosphärische Druck 30 - 240 min vor dem Aufbringen der Injektionsschicht angewendet wird.

11. Verfahren nach irgendeinem der Ansprüche 8 - 10, bei dem der unteratmosphärische Druck 2 - 45 min nach dem Aufbringen der Injektionsschicht angewendet wird.

12. Verfahren nach irgendeinem der vorangehenden Ansprüche, bei dem der poröse Gegenstand ausgewählt ist aus der Gruppe, welche umfasst: Dachziegel; Rohre, wie Abwasserrohre; Bauelemente für Windmühlen; Bauelemente für Ölanlagen; Bauelemente für Veranden oder Balkone; Bauelemente für Treppenhäuser, wie Treppenhausstufen; Leitungsmasten für die Aufhängung von Kabeln für die Weiterleitung von elektrischem Strom; Bauelemente für Böden; Bauelemente zur Verwendung auf dem Gebiet der Landwirtschaft, wie Ensilageböden, Bauelemente für Böden in Ensilagesilos oder für Lattenrostböden oder für Futtergänge oder für Gänge zum Sammeln von Fäkalien in Ställen; Tischplatten, Fensterbänke, Möbel.

13. Verfahren nach Anspruch 12, bei der der poröse Gegenstand ein Material auf Zement- oder Tonbasis oder Marmor, Terrazzo, Granit, Travertin, Sandstein oder Eternit ist.

14. Verfahren nach irgendeinem der vorangehenden Ansprüche, bei dem die Deckschicht und/oder die Injektionsschicht ein Biozid und/oder einen UV-Schutzzusatz umfasst.

15. Verfahren nach irgendeinem der vorangehenden Ansprüche, bei dem Schritt i) so modifiziert ist, dass er den folgenden Schritt ia) umfasst:
ia) Aufbringen einer ersten Injektionsschicht aus einem Material, das Acrylharz, Epoxy oder Polyurethan umfasst, unmittelbar gefolgt vom Aufbringen einer zweiten Injektionsschicht aus einem Material, das Acrylharz, Epoxy oder Polyurethan umfasst, auf die erste Injektionsschicht und Ermöglichen, dass zumindest ein Teil des aufgetragenen Materials in die Poren des Gegenstandes eintritt, wobei man unteratmosphärischen oder überatmosphärischen Druck verwendet.

16. Verfahren nach Anspruch 15, bei dem nur die erste Injektionsschicht und nicht die zweite Injektionsschicht oder die Deckschicht pulverförmiges Glas umfasst.

17. Verfahren nach Anspruch 15, bei dem nur die erste und die zweite Injektionsschicht und nicht die Deckschicht pulverförmiges Glas umfassen.

18. Verfahren nach Anspruch 15, bei dem nur die erste Injektionsschicht und die Deckschicht und nicht die zweite Injektionsschicht pulverförmiges Glas umfassen.

19. Verfahren nach Anspruch 15, bei dem die erste Injektionsschicht sowie die zweite Injektionsschicht und die Deckschicht pulverförmiges Glas umfassen.

20. Verfahren nach irgendeinem der Ansprüche 15 - 19, bei dem die erste und zweite Injektionsschicht als Nass-in-Nass-Aufbringung aufgebracht werden.

21. Verfahren nach irgendeinem der Ansprüche 1 - 14, bei dem die Injektionsschicht pulverförmiges Glas mit einer Teilchengröße im Bereich von 100 µm oder weniger umfasst, und bei dem Schritt iv) und Schritt v) weggelassen werden.

22. Verfahren nach Anspruch 21, bei dem der poröse Gegenstand ein Material auf Tonbasis ist.

23. Verfahren nach Anspruch 22, bei dem die Injektionsschicht transparentes Polyurethan umfasst.

24. Verfahren nach irgendeinem der Ansprüche 22 - 23, bei dem der poröse Gegenstand ein Dachziegel auf Tonbasis ist.

25. Verfahren nach irgendeinem der Ansprüche 22 - 24, bei dem die Menge an pulverförmigem Glas 2 - 30 Gew.-% der gesamten Menge des Acrylharzes, Epoxys oder Polyurethans ist, das im Schritt i) aufgebracht wird.

26. Verfahren nach irgendeinem der Ansprüche 22 - 25, bei dem die Injektionsschicht zusätzlich ein Biozid und/oder eine UV-Schutzsubstanz umfasst.

27. Poröser Gegenstand, imprägniert gemäß dem Verfahren nach irgendeinem der vorangehenden Ansprüche.

28. Gegenstand nach Anspruch 27, wobei der Gegenstand ausgewählt ist aus der Gruppe, welche umfasst: Dachziegel; Rohre, wie Abwasserrohre; Bauelemente für Windmühlen; Bauelemente für Ölanlagen; Bauelemente für Veranden oder Balkone; Bauelemente für Treppenhäuser, wie Treppenhausstufen; Leitungsmasten für die Aufhängung von Kabeln für die Weiterleitung von elektrischem Strom; Bauelemente für Böden; Bauelemente zur Verwendung auf dem Gebiet der Landwirtschaft, wie Ensilageböden, Bauelemente für Böden in Ensilagesilos oder für Lattenrostböden oder für Futtergänge oder für Gänge zum Sammeln von Fäkalien in Ställen; Tischplatten, Fensterbänke, Möbel.

29. Gegenstand nach Anspruch 28, bei dem der Gegenstand ein Material auf Zement- oder Tonbasis, Marmor, Terrazzo, Granit, Travertin, Sandstein oder Eternit ist.

30. Gegenstand nach irgendeinem der Ansprüche 27 - 29, bei dem der poröse Gegenstand einen Überzug aus Acrylharz, Epoxy und/oder Polyurethan umfasst, wobei der Überzug pulverförmiges Glas mit einer Teilchengröße im Bereich von 100 µm oder weniger umfasst.

## Revendications

1. Procédé d'imprégnation d'objets poreux comprenant les étapes i) à v) suivantes :
i) appliquer une couche d'injection d'un matériau comprenant un acrylique, un époxy ou un polyuréthane sur la surface d'au moins une partie de l'objet poreux et permettre l'entrée d'au moins une partie dudit matériau dans les pores dudit objet en utilisant une pression sub-atmosphérique ou super-atmosphérique ;
ii) permettre le retour de l'objet poreux sous une atmosphère de pression normale ;
iii) facultativement, permettre au moins partiellement le durcissement de la couche d'injection ;
iv) appliquer une couche de finition en acrylique, en époxy ou en polyuréthane sur la zone de l'objet poreux imprégnée par la couche d'injection ;
v) permettre le durcissement de la couche de finition ;
ledit procédé étant **caractérisé en ce que** la couche d'injection appliquée dans l'étape i) et/ou la couche de finition appliquée dans l'étape iv) comprend du verre pulvérisé possédant une taille de particule inférieure ou égale à 100 µm.

2. Procédé selon la revendication 1, dans lequel la quantité de verre est de 2 à 94 % en poids de la quantité totale d'acrylique, d'époxy ou de polyuréthane de la quantité appliquée dans l'étape respective.

3. Procédé selon l'une quelconque des revendications 1 à 2, dans lequel ledit verre pulvérisé présente une répartition granulométrique telle qu'au minimum 50 % en poids des particules possèdent une taille de particule de 20 µm ou moins.

4. Procédé selon l'une quelconque des revendications précédentes, dans lequel les objets à imprégner sont stockés à approximativement 30 à 50 °C pendant 12 heures immédiatement avant l'imprégnation.

5. Procédé selon l'une quelconque des revendications 1 à 4, dans lequel la couche d'injection est appliquée en utilisant une pression super-atmosphérique, et dans lequel la pression super-atmosphérique est appliquée après l'application de la couche d'injection.

6. Procédé selon la revendication 5, dans lequel la pression super-atmosphérique est 1,5 à 25 bar.

7. Procédé selon la revendication 6, dans lequel l'objet est soumis à une pression super-atmosphérique pendant 5 secondes à 10 minutes.

8. Procédé selon la revendication 4, dans lequel la couche d'injection est appliquée à une pression sub-atmosphérique, et dans lequel la pression sub-atmosphérique est appliquée avant et sous l'application de la couche d'injection.

9. Procédé selon la revendication 8, dans lequel la pression sub-atmosphérique est de 0,001 à 0,8 bar.

10. Procédé selon la revendication 8 ou 9, dans lequel la pression sub-atmosphérique est appliquée pendant 30 à 240 minutes avant l'application de la couche d'injection.

11. Procédé selon l'une quelconque des revendications 8 à 10, dans lequel la pression sub-atmosphérique est appliquée pendant 2 à 45 minutes après l'application de la couche d'injection.

12. Procédé selon l'une quelconque des revendications précédentes, dans lequel l'objet poreux est choisi dans le groupe comprenant : les tuiles de toiture ; les tuyaux, comme les tuyaux d'évacuation ; les éléments de construction pour les moulins à vent ; les éléments de construction pour les installations de forage de pétrole ; les éléments de construction pour les terrasses et les balcons ; les éléments de construction pour les escaliers, comme que les marches d'escalier ; les pylônes de suspension de câbles pour la transmission de l'énergie électrique ; les éléments de construction pour les planchers ; les éléments de construction utilisables dans le domaine de l'agriculture, comme les planchers d'ensilage, les éléments de construction pour les planchers des silos d'ensilage ou pour les planchers lattés ou pour les couloirs d'affouragement ou pour les allées pour collecter la matière fécale dans les écuries ; les plateaux de table, les tablettes d'appui de fenêtre, le mobilier.

13. Procédé selon la revendication 12, dans lequel l'objet poreux est un matériau à base de ciment ou d'argile, ou de marbre, de terrazzo, de granit, de travertin, de grès ou d'éternit.

14. Procédé selon l'une quelconque des revendications précédentes, dans lequel la couche de finition et/ou la couche d'injection comprend un biocide et/ou un additif anti-UV.

15. Procédé selon l'une quelconque des revendications précédentes, dans lequel l'étape i) est modifiée afin de comprendre l'étape ia) suivante :
la) appliquer une première couche d'injection d'un matériau comprenant un acrylique, un époxy ou un polyuréthane immédiatement suivie par l'application d'une seconde couche d'injection d'un matériau comprenant un acrylique, un époxy ou un polyuréthane sur la première couche d'injection et permettre l'entrée d'au moins une partie du matériau appliqué dans les pores dudit objet en utilisant une pression sub-atmosphérique ou super-atmosphérique.

16. Procédé selon la revendication 15, dans lequel seule la première couche d'injection et non la seconde couche d'injection ou la couche de finition comprend du verre pulvérisé.

17. Procédé selon la revendication 15, dans lequel seules les première et seconde couches d'injection et non la couche de finition comprennent du verre pulvérisé.

18. Procédé selon la revendication 15, dans lequel seules la première couche d'injection et la couche de finition et non la seconde couche d'injection comprennent du verre pulvérisé.

19. Procédé selon la revendication 15, dans lequel la première couche d'injection ainsi que la seconde couche d'injection et la couche de finition comprennent du verre pulvérisé.

20. Procédé selon l'une quelconque des revendications 15 à 19, dans lequel les première et seconde couches d'injection sont appliquées selon une application mouillé sur mouillé.

21. Procédé selon l'une quelconque des revendications 1 à 14, dans lequel la couche d'injection comprend du verre pulvérisé possédant une taille de particule inférieure ou égale à 100 µm, et dans lequel l'étape iv) et l'étape v) sont omises.

22. Procédé selon la revendication 21, dans lequel l'objet poreux est un matériau à base d'argile.

23. Procédé selon la revendication 22, dans lequel la couche d'injection comprend un polyuréthane transparent.

24. Procédé selon l'une quelconque des revendications 22 à 23, dans lequel l'objet poreux est une tuile de toiture à base d'argile.

25. Procédé selon l'une quelconque des revendications 22 à 24, dans lequel la quantité de verre pulvérisé est de 2 à 30 % en poids de la quantité totale d'acrylique, d'époxy ou de polyuréthane appliqué dans l'étape i).

26. Procédé selon l'une quelconque des revendications 22 à 25, dans lequel la couche d'injection comprend en outre un biocide et/ou une substance anti-UV.

27. Objet poreux imprégné selon le procédé d'une quelconque des revendications précédentes.

28. Objet selon la revendication 27, ledit objet étant choisi dans le groupe constitué par les tuiles de toiture ; les tuyaux, comme les tuyaux d'évacuation ; les éléments de construction pour les moulins à vent; les éléments de construction pour les installations de forage de pétrole ; les éléments de construction pour les terrasses et les balcons ; les éléments de construction pour les escaliers, comme que les marches d'escalier; les pylônes de suspension de câbles pour la transmission de l'énergie électrique ; les éléments de construction pour les planchers ; les éléments de construction utilisables dans le domaine de l'agriculture, comme les planchers d'ensilage, les éléments de construction pour les planchers des silos d'ensilage ou pour les planchers lattés ou pour les couloirs d'affouragement ou pour les allées pour collecter la matière fécale dans les écuries ; les plateaux de table, les tablettes d'appui de fenêtre, le mobilier.

29. Objet selon la revendication 28, dans lequel ledit objet est un matériau à base de ciment ou d'argile, de marbre, de terrazzo, de granit, de travertin, de grès ou d'éternit.

30. Objet selon l'une quelconque des revendications 27 à 29, dans lequel l'objet poreux comprend un revêtement en acrylique, en époxy et/ou en polyuréthane, ledit revêtement comprenant du verre pulvérisé possédant une taille de particule inférieure ou égale à 100 µm.
